(19) Europäisches Patentamt / European Patent Office / Office européen des brevets

(11) **EP 4 273 184 A1**

(12) **EUROPEAN PATENT APPLICATION**
published in accordance with Art. 153(4) EPC

(43) Date of publication:
**08.11.2023 Bulletin 2023/45**

(21) Application number: **22742852.1**

(22) Date of filing: **20.01.2022**

(51) International Patent Classification (IPC):
**C08G 64/30** (2006.01)   **C08G 63/64** (2006.01)
**C08L 69/00** (2006.01)   **C08L 1/02** (2006.01)
**C08K 7/02** (2006.01)

(52) Cooperative Patent Classification (CPC):
Y02W 90/10

(86) International application number:
**PCT/KR2022/001038**

(87) International publication number:
**WO 2022/158876 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.01.2021 KR 20210009488**

(71) Applicant: **Korea Research Institute of Chemical
Technology
Daejeon 34114 (KR)**

(72) Inventors:
• **PARK, Jeyoung
Daejeon 34114 (KR)**

• **HWANG, Sung Yeon
Daejeon 34114 (KR)**
• **OH, Dong Yeop
Daejeon 34114 (KR)**
• **KOO, Jun Mo
Daejeon 34114 (KR)**
• **KIM, Hye Ri
Daejeon 34114 (KR)**
• **JEON, Hyeon Yeol
Daejeon 34114 (KR)**
• **CHOI, Sejin
Daejeon 34114 (KR)**

(74) Representative: **Herrmann, Uwe
Lorenz Seidler Gossel
Rechtsanwälte Patentanwälte
Partnerschaft mbB
Widenmayerstraße 23
80538 München (DE)**

(54) **POLYBUTYLENESUCCINATE-CARBONATE CROSSLINKED COPOLYMER, COMPOSITE MATERIAL OF SAME CROSSLINKED COPOLYMER AND NANOCELLULOSE, AND METHOD FOR PREPARING SAME**

(57) The present invention relates to a polybutylene succinate-carbonate crosslinked copolymer, a composite material of the crosslinked copolymer and nanocellulose, and a method for preparing the same, and more particularly, to a composite material having significantly improved mechanical properties such as tensile toughness and tear toughness and excellent biodegradability, and a method for preparing the same.

EP 4 273 184 A1

**Description**

[Technical Field]

The present invention relates to a composite material of a polybutylene succinate-carbonate crosslinked copolymer and nanocellulose having improved tensile toughness and tear toughness, and a method for preparing the same.

[Background Art]

Plastic has been used as a significantly important material in modern life because it may be mass-produced in various ways and has excellent lightness, durability, chemical resistance, and mechanical properties. However, the current environmental pollution situation around the world is serious enough to be concerned about, and plastic waste, in particular, disposable waste, has recently emerged as the main culprit of such environmental pollution. Therefore, the application and development of biodegradable resins for disposable products have been actively conducted. Examples of biodegradable resins developed so far include polylactic acid (PLA) synthesized by the ring-opening reaction of lactic acid or lactide in the presence of a chemical catalyst or an enzyme, polycaprolactone chemically synthesized from an ε-caprolactone monomer as a starting material, a diol-diacid-based aliphatic polyester, and polyhydroxybutyrate (PHB) synthesized in vivo by microorganisms.

However, in spite of these efforts, the price of the biodegradable resin is still higher than that of conventional non-degradable plastics, and processability and mechanical properties of the biodegradable resin are inferior to those of general-purpose resins, and therefore, there are many restrictions on the use of the biodegradable resin. In the case of polylactic acid, usage is increasing because its price is relatively cheaper than other biodegradable resins, but a heat resistance temperature is low and it is weak against impact. Polycaprolactone has poor processability due to a low melting point. An aliphatic polyester has poor storage stability, heat sealability, and mechanical properties and is expensive, and thus its commercialization has been delayed. In particular, polymers having strong crystallinity, such as polybutylene succinate, have low tear properties, and thus their utilization is limited.

In order to solve the problems of the aliphatic polyester described above, there is provided an aliphatic/aromatic copolyester prepared by adding an aromatic monomer, and a method for preparing the same has been proposed. However, until now, it is difficult to process the aliphatic/aromatic copolyester due to a low cooling rate, and a plastic bag produced using the aliphatic/aromatic copolyester is not valuable as a product because it does not have openness.

In order to solve the above problems, an aliphatic or aliphatic/aromatic copolyester has been mainly used as a component of a resin composition mixed with polylactic acid (PLA), starch, talc, calcium carbonate, and the like. As an example, there is a method for preparing a resin by preparing starch into thermoplastic starch by a separate device and process and then compounding the thermoplastic starch with a biodegradable resin.

In addition, there is a method for preparing a resin by adding a chain extender to a biodegradable aliphatic polyester resin and polylactic acid in a twin-screw extruder. As another method, an attempt has been made to blend 7 to 60 parts by weight of polybutylene succinate (including polybutylene succinate-co-butylene adipate)-based aliphatic polyester with polylactic acid (or a copolymer thereof). A product molded using the resin thus obtained exhibits a disadvantage in that the physical properties of the product are significantly deteriorated over time.

As a conventional technique for ameliorating the disadvantages of these biodegradable resins, a method for preparing a biodegradable resin composition prepared by compounding a composition containing polylactic acid in an amount of 36 parts by weight with respect to 100 parts by weight of an aliphatic polyester and an aliphatic/aromatic copolyester using a twin-screw extruder has been proposed. However, in this case, in the process of compounding polylactic acid (or a copolymer thereof) with polybutylene succinate (or a copolymer thereof), the thermal stability of the prepared resin is significantly reduced when extruded at a high temperature due to a high melting point of polylactic acid, and the mechanical properties of the prepared resin are also deteriorated.

**[Disclosure]**

[Technical Problem]

In order to solve the above problems, an object of the present invention is to provide a polybutylene succinate-carbonate crosslinked copolymer containing a succinate-based monomer, a carbonate-based monomer, a crosslinkable multifunctional monomer, and 1,4-butanediol, thereby providing more excellent mechanical properties such as tensile toughness and tear toughness and excellent biodegradability.

Another object of the present invention is to provide a composite material of a polybutylene succinate-carbonate crosslinked copolymer and nanocellulose obtained by mixing the polybutylene succinate-carbonate crosslinked copolymer and nanocellulose, thereby providing more excellent mechanical properties such as tensile toughness and tear toughness and excellent biodegradability.

[Technical Solution]

In one general aspect, a polybutylene succinate-carbonate crosslinked copolymer contains a succinate-based monomer, a carbonate-based monomer, a crosslinkable multifunctional monomer, and 1,4-butanediol.

In this case, the crosslinkable multifunctional monomer may be a monomer in which the sum of the number of functional groups is three or more, and the functional groups may be any one or two or more selected from a hydroxy group, a carboxylic acid group, and a carboxylate group(an ester group of a carboxylic acid group).

In one embodiment of the present invention, a molar ratio of the succinate-based monomer to the carbonate-based monomer in the polybutylene succinate-carbonate crosslinked copolymer may be 0.1 to 90:10 to 99.9 mol%.

In one embodiment of the present invention, a molar ratio of the crosslinkable multifunctional monomer may be 0.01 to 0.8 mol% with respect to the entirety of the succinate-based monomer and the carbonate-based monomer.

In one embodiment of the present invention, the crosslinkable multifunctional monomer may be one or more selected from citric acid and tartaric acid.

In one embodiment of the present invention, the polybutylene succinate-carbonate crosslinked copolymer may have tensile toughness satisfying the following Expression 1:

[Expression 1]

$$\frac{TT_1}{TT_0} \times 100 \geq 200(\%)$$

($TT_0$ is tensile toughness (MJ/m$^3$) of polybutylene succinate, and $TT_1$ is tensile toughness (MJ/m$^3$) of the polybutylene succinate-carbonate crosslinked copolymer).

In one embodiment of the present invention, the polybutylene succinate-carbonate crosslinked copolymer may have tear toughness satisfying the following Expression 2:

[Expression 2]

$$\frac{tt_1}{tt_0} \times 100 \geq 200(\%)$$

($tt_0$ is tear toughness (J/cm) of polybutylene succinate, and $tt_1$ is tear toughness (J/cm) of the polybutylene succinate-carbonate crosslinked copolymer).

In another general aspect, there is provided a disposable bag produced using the polybutylene succinate-carbonate crosslinked copolymer.

In still another general aspect, there is provided a composite material of a polybutylene succinate-carbonate crosslinked copolymer and nanocellulose, the composite material containing a succinate-based monomer, a carbonate-based monomer, a crosslinkable multifunctional monomer, 1,4-butanediol, and nanocellulose, wherein the crosslinkable multifunctional monomer is a monomer in which the number of functional groups is three or more, and the functional groups are any one or two or more selected from a hydroxy group, a carboxylic acid group, and a carboxylate group.

In one embodiment of the present invention, the nanocellulose may be contained in an amount of 0.01 to 0.8 parts by weight with respect to 100 parts by weight of the polybutylene succinate-carbonate crosslinked copolymer.

In one embodiment of the present invention, the nanocellulose may have an average diameter of 2 nm to 200 nm and an average length of 100 nm to 10 pm.

In one embodiment of the present invention, the composite material of the polybutylene succinate-carbonate crosslinked copolymer and the nanocellulose may have tensile toughness satisfying the following Expression 3:

[Expression 3]

$$\frac{TT_2}{TT_0} \times 100 \geq 300(\%)$$

($TT_0$ is tensile toughness (MJ/m$^3$) of polybutylene succinate, and $TT_2$ is tensile toughness (MJ/m$^3$) of the composite material of the polybutylene succinate-carbonate crosslinked copolymer and the nanocellulose).

In one embodiment of the present invention, the composite material of the polybutylene succinate-carbonate crosslinked copolymer and the nanocellulose may have tear toughness satisfying the following Expression 4:

[Expression 4]

$$\frac{tt_2}{tt_0} \times 100 \geq 300(\%)$$

($tt_0$ is tear toughness (J/cm) of polybutylene succinate, and $tt_2$ is tear toughness (J/cm) of the composite material of the polybutylene succinate-carbonate crosslinked copolymer and the nanocellulose).

In one embodiment of the present invention, the composite material of the polybutylene succinate-carbonate crosslinked copolymer and the nanocellulose may be prepared by an in-situ polymerization process.

In still another general aspect, there is provided a disposable bag produced using the composite material of the polybutylene succinate-carbonate crosslinked copolymer and the nanocellulose.

In still another general aspect, there is provided a method for preparing a composite material of a polybutylene succinate-carbonate crosslinked copolymer and nanocellulose.

In still another general aspect, a method for preparing a composite material of a polybutylene succinate-carbonate crosslinked copolymer and nanocellulose includes: dispersing nanocellulose in 1,4-butanediol to prepare a dispersion; and

mixing a succinate-based monomer, a carbonate-based monomer, a crosslinkable multifunctional monomer, and the 1,4-butanediol dispersion to prepare a composite material of a polybutylene succinate-carbonate crosslinked copolymer and nanocellulose in an in-situ manner.

In this case, the crosslinkable multifunctional monomer is a monomer in which the sum of the number of functional groups is three or more, and the functional groups are any one or two or more selected from a hydroxy group, a carboxylic acid group, and a carboxylate group (an ester group of a carboxylic acid group).

In this case, the crosslinkable multifunctional monomer may be a monomer in which a sum of the number of functional groups is three or more, and the functional groups may be any one or two or more selected from a hydroxy group, a carboxylic acid group, and a carboxylate group (an ester group of a carboxylic acid group).

In one embodiment of the present invention, a molar ratio of the succinate-based monomer to the carbonate-based monomer in the polybutylene succinate-carbonate crosslinked copolymer may be 0.1 to 90:10 to 99.9 mol%.

In one embodiment of the present invention, a molar ratio of the crosslinkable multifunctional monomer may be 0.01 to 0.8 mol% with respect to the entirety of the succinate-based monomer and the carbonate-based monomer.

In one embodiment of the present invention, the crosslinkable multifunctional monomer may be one or more selected from citric acid and tartaric acid.

In one embodiment of the present invention, the nanocellulose may be contained in an amount of 0.01 to 0.8 parts by weight with respect to 100 parts by weight of the polybutylene succinate-carbonate crosslinked copolymer.

In one embodiment of the present invention, the nanocellulose may have an average diameter of 2 nm to 200 nm and an average length of 100 nm to 10 $\mu$m.

[Advantageous Effects]

As set forth above, the polybutylene succinate-carbonate crosslinked copolymer and the composite material of the polybutylene succinate-carbonate crosslinked copolymer and the nanocellulose according to the present invention have excellent tensile strength and significantly high rates of increases in tensile toughness and tear toughness.

[Best Mode]

Hereinafter, a polybutylene succinate-carbonate crosslinked copolymer, a composite material of the crosslinked copolymer and nanocellulose, and a method for preparing the same according to the present invention will be described in detail.

Herein, unless otherwise defined, all the technical terms and scientific terms have the same meanings as commonly understood by those skilled in the art to which the present invention pertains. The terms used in the description of the present invention are merely used to effectively describe a specific embodiment, but are not intended to limit the present invention. In addition, unless otherwise stated in the specification, a unit of an additive may be wt%.

In addition, unless the context clearly indicates otherwise, the singular forms used in the specification and the scope of the appended claims are intended to include the plural forms.

The present invention provides a polybutylene succinate-carbonate crosslinked copolymer containing a succinate-based monomer, a carbonate-based monomer, a crosslinkable multifunctional monomer, and 1,4-butanediol.

The crosslinkable multifunctional monomer may be a monomer in which the number of functional groups is three or more, and the functional groups may be any one or two or more selected from a hydroxy group, a carboxylic acid group, and a carboxylate group.

In this case, examples of the crosslinkable multifunctional monomer include a monomer in which a sum of the number of functional groups is three or more, such as citric acid or tartaric acid, and when the above conditions are satisfied, that is, when crosslinking is possible, the compound is not limited.

In the present invention, a molar ratio of the succinate-based monomer to the carbonate-based monomer is preferably 0.1 to 90:10 to 99.9 mol% in deriving the effect of the present invention, but is not limited thereto.

In the present invention, a molar ratio of the crosslinkable multifunctional monomer is preferably 0.01 to 0.8 mol% and more preferably 0.01 to 0.5 mol% with respect to the entirety of the succinate-based monomer and the carbonate-based monomer in deriving the effect of the present invention, but is not limited thereto.

In the present invention, the succinate-based monomer may refer to succinic acid or an esterified compound of succinic acid, and in this case, dialkyl succinate is preferable. Dimethyl succinate is more preferable in deriving the effect according to the present invention, but is not limited thereto.

In the present invention, the carbonate-based monomer is preferably dialkyl carbonate, and dimethyl carbonate is more preferable in deriving the effect according to the present invention, but is not limited thereto.

The polybutylene succinate-carbonate crosslinked copolymer according to the present invention may significantly improve tensile toughness and tear toughness compared to polybutylene succinate.

According to one aspect of the present invention, the polybutylene succinate-carbonate crosslinked copolymer may have tensile toughness satisfying the following Expression 1:

[Expression 1]

$$\frac{TT_1}{TT_0} \times 100 \geq 200(\%)$$

$TT_0$ is tensile toughness ($MJ/m^3$) of polybutylene succinate, and $TT_1$ is tensile toughness ($MJ/m^3$) of the polybutylene succinate-carbonate crosslinked copolymer.

Expression 1 may satisfy a rate of increase in tensile toughness of preferably 250% or more and more preferably 280% or more.

According to one aspect of the present invention, the polybutylene succinate-carbonate crosslinked copolymer may have tear toughness satisfying the following Expression 2:

[Expression 2]

$$\frac{tt_1}{tt_0} \times 100 \geq 200(\%)$$

$tt_0$ is tear toughness (J/cm) of polybutylene succinate, and $tt_1$ is tear toughness (J/cm) of the polybutylene succinate-carbonate crosslinked copolymer.

Expression 2 may satisfy a rate of increase in tear toughness of preferably 250% or more and more preferably 280% or more.

Therefore, according to the present invention, the polybutylene succinate-carbonate crosslinked copolymer may be used to produce a disposable bag that overcomes low mechanical properties of conventional biodegradable plastics through excellent tensile toughness and tear toughness without an excessive amount of reinforcing material.

Another aspect of the present invention provides a composite material of a polybutylene succinate-carbonate crosslinked copolymer and nanocellulose, the composite material containing a succinate-based monomer, a carbonate-based monomer, a crosslinkable multifunctional monomer, 1,4-butanediol, and nanocellulose.

The crosslinkable multifunctional monomer may be a monomer in which the number of functional groups is three or more, and the functional groups may be any one or two or more selected from a hydroxy group, a carboxylic acid group, and a carboxylate group.

The composite material of the polybutylene succinate-carbonate crosslinked copolymer and the nanocellulose according to the present invention has significantly excellent mechanical properties such as tensile toughness and tear toughness and improved hardness and optical and ultraviolet resistance.

According to one aspect of the present invention, the nanocellulose refers to nano-sized rod-shaped particles or fibers in which cellulose chains are bundled together. Specifically, the nanocellulose may be classified into cellulose nanofibril (CNF) or cellulose nanocrystal (CNC) according to the extraction method. In this case, mixing cellulose nanocrystal (CNC) is more preferable in deriving the effect according to the present invention, but the present invention is not limited thereto.

According to one aspect of the present invention, the nanocellulose may be contained in an amount of 0.01 to 0.8 parts by weight with respect to 100 parts by weight of the polybutylene succinate-carbonate crosslinked copolymer.

According to one aspect of the present invention, the nanocellulose may have an average diameter of 2 to 200 nm and an average length of 100 nm to 10 pm. Preferably, the nanocellulose may have an average diameter of 2 to 100 nm and an average length of 100 nm to 5 pm, and more preferably, may have an average diameter of 2 to 100 nm and an average length of 100 to 900 nm. In the case of containing the nanocellulose as described above, a synergistic effect of mechanical properties, particularly tensile toughness and tear toughness, of the composite material of the polybutylene succinate-carbonate crosslinked copolymer and the nanocellulose according to the present invention is superior, which is preferable.

According to one aspect of the present invention, the composite material of the polybutylene succinate-carbonate crosslinked copolymer and the nanocellulose may have tensile toughness satisfying the following Expression 3:

[Expression 3]

$$\frac{TT_2}{TT_0} \times 100 \geq 300(\%)$$

$TT_0$ is tensile toughness (MJ/m$^3$) of polybutylene succinate, and $TT_2$ is tensile toughness (MJ/m$^3$) of the composite material of the polybutylene succinate-carbonate crosslinked copolymer and the nanocellulose.

Expression 3 may satisfy a rate of increase in tensile toughness of preferably 330% or more and more preferably 350% or more.

According to one aspect of the present invention, the composite material of the polybutylene succinate-carbonate crosslinked copolymer and the nanocellulose may have tear toughness satisfying the following Expression 4:

[Expression 4]

$$\frac{tt_2}{tt_0} \times 100 \geq 300(\%)$$

$tt_0$ is tear toughness (J/cm) of polybutylene succinate, and $tt_2$ is tear toughness (J/cm) of the composite material of the polybutylene succinate-carbonate crosslinked copolymer and the nanocellulose.

Expression 4 may satisfy a rate of increase in tear toughness of preferably 330% or more and more preferably 350% or more.

According to the present invention, the composite material of the polybutylene succinate-carbonate crosslinked copolymer and the nanocellulose may be prepared by an in-situ polymerization process. When the composite material is prepared by mixing nanocellulose in the polymerization of the polybutylene succinate-carbonate crosslinked copolymer by the in-situ polymerization method, more excellent tensile toughness and tear toughness may be satisfied, which is preferable. Therefore, the composite material of the polybutylene succinate-carbonate crosslinked copolymer and the nanocellulose according to the present invention may secure excellent rates of increases in tensile toughness and tear toughness without an excessive amount of reinforcing material as described above, such that deformation and damage caused by an external impact may be prevented, and long-term durability may be obtained.

Therefore, according to the present invention, the composite material of the polybutylene succinate-carbonate crosslinked copolymer and the nanocellulose may be used to produce a disposable bag that overcomes low mechanical properties of conventional biodegradable plastics through excellent tensile toughness and tear toughness without an excessive amount of reinforcing material.

Still another aspect of the present invention provides a method for preparing a composite material of a polybutylene succinate-carbonate crosslinked copolymer and nanocellulose, the method including: dispersing nanocellulose in 1,4-butanediol to prepare a dispersion; and

mixing a succinate-based monomer, a carbonate-based monomer, a crosslinkable multifunctional monomer, and the 1,4-butanediol dispersion to prepare a composite material of a polybutylene succinate-carbonate crosslinked copolymer and nanocellulose in an in-situ manner.

The crosslinkable multifunctional monomer may be a monomer in which the number of functional groups is three or more, and the functional groups may be any one or two or more selected from a hydroxy group, a carboxylic acid group, and a carboxylate group.

In this case, examples of the crosslinkable multifunctional monomer include a monomer in which a sum of the number of functional groups is three or more, such as citric acid or tartaric acid, and when the above conditions are satisfied, that is, when crosslinking is possible, the compound is not limited.

In the present invention, a molar ratio of the succinate-based monomer to the carbonate-based monomer is preferably 0.1 to 90:10 to 99.9 mol% in deriving the effect of the present invention, but is not limited thereto.

In the present invention, a molar ratio of the crosslinkable multifunctional monomer is preferably 0.01 to 0.8 mol% and more preferably 0.01 to 0.5 mol% with respect to the entirety of the succinate-based monomer and the carbonate-based monomer in deriving the effect of the present invention, but is not limited thereto.

According to one aspect of the present invention, the nanocellulose may be contained in an amount of 0.01 to 0.8 parts by weight with respect to 100 parts by weight of the polybutylene succinate-carbonate crosslinked copolymer.

According to one aspect of the present invention, the nanocellulose may have an average diameter of 2 to 200 nm and an average length of 100 nm to 10 pm. Preferably, the nanocellulose may have an average diameter of 2 to 100 nm and an average length of 100 nm to 5 pm, and more preferably, may have an average diameter of 2 to 100 nm and an average length of 100 to 900 nm.

[Mode for Invention]

Hereinafter, the present invention will be described in more detail with reference to Examples and Comparative Examples. However, the following Examples and Comparative Examples are only examples for describing the present invention in more detail, and the present invention is not limited by the following Examples and Comparative Examples.

[Physical Property Measurement Methods]

(1) Tensile Test

Tensile stress-strain curves were measured according to ASTM D638-TYPE V using Instron 5943 equipment, and a tensile toughness value was calculated by integrating the curves. The measurement was performed at 25°C with a load cell of 1 kN and a crosshead speed of 100 mm/min. An average value of five measurements was obtained.

A rate (%) of increase in tensile toughness of a polybutylene succinate-carbonate crosslinked copolymer was calculated as a rate of increase relative to tensile toughness of polybutylene succinate by the following Calculation Formula 1.

[Calculation Formula 1]

Rate of increase in tensile toughness of polybutylene succinate-carbonate crosslinked copolymer = (Tensile toughness of polybutylene succinate-carbonate crosslinked copolymer/Tensile toughness of polybutylene succinate) x 100

A rate (%) of increase in tensile toughness of a composite material of a polybutylene succinate-carbonate crosslinked copolymer and nanocellulose was calculated as a rate of increase relative to tensile toughness of polybutylene succinate by the following Calculation Formula 2.

[Calculation Formula 2]

Rate of increase in tensile toughness of composite material of polybutylene succinate-carbonate crosslinked copolymer and nanocellulose = (Tensile toughness of composite material of polybutylene succinate-carbonate crosslinked copolymer and nanocellulose/Tensile toughness of polybutylene succinate) x 100

(2) Tear Test

Tear strength was measured according to KS M 6518 standard (10.2.1 type B) test method. Tear stress-strain curves were measured using Instron 5943 equipment, and a tear toughness value was calculated by integrating the curves. The measurement was performed at 25°C with a load cell of 1 kN and a crosshead speed of 500 mm/min. An average value of five measurements was obtained.
A rate (%) of increase in tear toughness of a polybutylene succinate-carbonate crosslinked copolymer was calculated as a rate of increase relative to tear toughness of polybutylene succinate by the following Calculation Formula 3.

[Calculation Formula 3]

Rate of increase in tear toughness of polybutylene succinate-carbonate crosslinked copolymer = (Tear toughness of polybutylene succinate-carbonate crosslinked copolymer/Tear toughness of polybutylene succinate) x 100

A rate (%) of increase in tear toughness of a composite 8, wherein the nanocellulose has an average diameter of 2 nm to 200 nm and an average length of 100 nm to 10 $\mu$m. material of a polybutylene succinate-carbonate crosslinked copolymer and nanocellulose was calculated as a rate of increase relative to tear toughness of polybutylene succinate by the following Calculation Formula 4.

[Calculation Formula 4]

Rate of increase in tear toughness of composite material of polybutylene succinate-carbonate crosslinked copolymer and nanocellulose = (Tear toughness of composite material of polybutylene succinate-carbonate crosslinked copolymer and nanocellulose/Tear toughness of polybutylene succinate) x 100

(3) Molar Ratio (mol%) of Succinate-Based Monomer to Carbonate-Based Monomer

A molar ratio (mol%) of the succinate-based monomer to the carbonate-based monomer was calculated by the following Calculation Formula 5 by quantitatively analyzing $^1$H NMR. As an example, the molar ratio calculation results according to Comparative Example 2 and Example 1 are shown.

[Calculation Formula 5]

$$[DMC]content(\%) = \left(1 - \frac{[DMS]}{[DMC] + [DMS]}\right) \times 100 = (1 - \frac{[DMS]}{[BD]}) \times 100$$

DMS: Dimethyl succinate
DMC: Dimethyl carbonate
BD: 1,4-Butanediol

1) Calculation Result according to Comparative Example 2

$$[DMC]content(\%) = \left(1 - \frac{[DMS]}{[DMC] + [DMS]}\right) \times 100 = \left(1 - \frac{[DMS]}{[BD]}\right) \times 100$$

$$= \left(1 - \frac{1}{1.32}\right) \times 100 = 24 \, mol\%$$

2) Calculation Result according to Example 1

$$[DMC]content(\%) = \left(1 - \frac{[DMS]}{[DMC] + [DMS]}\right) \times 100 = \left(1 - \frac{[DMS]}{[BD]}\right) \times 100$$

$$= \left(1 - \frac{1}{1.22}\right) \times 100 = 18 \, mol\%$$

(4) Weight Average Molecular Weight

As for a weight average molecular weight, a molecular weight value and molecular weight distribution in terms of standard polystyrene were obtained by gel permeation chromatography (GPC) measurement with a refractive index sensor using chloroform as a solvent.

GPC equipment: ACQUITY APC manufactured by Waters Corporation
Column: ACQUITY APC™ manufactured by Waters Corporation
Column temperature: 30°C
Injection amount: 50 μl
Flow rate: 0.62 ml/min

[Example 1]

Dimethyl succinate (DMS) (75.99 g, 0.52 mol), dimethyl carbonate (DMC) (70.26 g, 0.78 mol), 1,4-butanediol (BD) (97.32 g, 1.08 mol), and citric acid (CA) (0.1 g, $5.20 \times 10^{-4}$ mol) were injected into a reactor.

The temperature was raised to 80°C, titanium(IV) butoxide (0.132 g, $3.9 \times 10^{-4}$ mol) was added to the reactor, and then the reaction mixture was slowly heated and stirred from 80°C to 150°C for 9 hours to allow an esterification reaction for obtaining an intermediate product to proceed.

In the next step, the temperature was raised to 200°C, and a stirring speed was slowly reduced from 100 rpm to 30 rpm while slowly lowering a degree of vacuum to 100 mTorr or less. The final product removed from the reactor was quenched in water, and the quenched final product was dried at 60°C for 48 hours, thereby obtaining 100 g of a polybutylene succinate-carbonate crosslinked copolymer having a weight average molecular weight of 142,600 g/mol.

[Example 2]

A process was performed in the same manner as that of Example 1 except that citric acid (CA) (0.1 g, $5.20 \times 10^{-4}$ mol) was changed to tartaric acid (TA) (0.1 g, $6.63 \times 10^{-4}$ mol) when the initial monomers were injected.

100 g of a polybutylene succinate-carbonate crosslinked copolymer having a weight average molecular weight of 143,200 g/mol was obtained.

[Example 3]

A process was performed in the same manner as that of Example 1 except that 0.097 g (0.097 wt% with respect to the theoretically obtained weight) of nanocellulose (cellulose nanocrystal (CNC)) was dispersed in 1,4-butanediol (BD) in advance and then injected into the reactor. The nanocellulose (cellulose nanocrystal (CNC)) was dispersed in 1,4-butanediol (BD) with probe tip-sonication (VCX 750, 750 W, 20 kHz; SONICS&MATERIALS, USA) for 25 minutes.

100 g of a composite material of a polybutylene succinate-carbonate crosslinked copolymer and nanocellulose having a weight average molecular weight of 142,800 g/mol was obtained.

[Comparative Example 1]

Succinic acid (51.4 g, 0.435 mol) and 1,4-butanediol (BD) (47.1 g, 0.523 mol) were injected into a reactor.

The temperature was raised to 150°C, titanium(IV) butoxide (0.07 g, $2.1 \times 10^{-4}$ mol) was added to the reactor, and then the reaction mixture was heated and stirred at 180°C for 2 hours to allow an esterification reaction for obtaining an intermediate product to proceed.

In the next step, the temperature was raised to 240°C, and a degree of vacuum was slowly lowered to 100 mTorr or less. The final product removed from the reactor was quenched in water, and the quenched final product was dried at 80°C for 24 hours, thereby obtaining polybutylene succinate having a weight average molecular weight of 141,500 g/mol.

[Comparative Example 2]

A process was performed in the same manner as that of Example 1 except that dimethyl succinate (DMS) (75.99 g, 0.52 mol), dimethyl carbonate (DMC) (70.26 g, 0.78 mol), and 1,4-butanediol (BD) (97.32 g, 1.08 mol) were injected into the reactor except for citric acid (CA) (0.1 g, $5.20 \times 10^{-4}$ mol) when the initial monomers were injected.

100 g of a polybutylene succinate-carbonate copolymer having a weight average molecular weight of 158,000 g/mol was obtained.

[Comparative Example 3]

A process was performed in the same manner as that of Example 1 except that citric acid (CA) (2 g, 0.0104 mol) was added instead of citric acid (CA) (0.1 g, $5.20 \times 10^{-4}$ mol) when the initial monomers were injected.

100 g of a polybutylene succinate-carbonate crosslinked copolymer having a weight average molecular weight of 172,600 g/mol was obtained.

[Comparative Example 4]

A process was performed in the same manner as that of Example 3 except that nanocellulose (cellulose nanocrystal (CNC)) was added in an amount of 0.97 g (0.97 wt% with respect to the theoretically obtained weight) instead of 0.097 g.

100 g of a composite material of a polybutylene succinate-carbonate crosslinked copolymer and nanocellulose having a weight average molecular weight of 168,500 g/mol was obtained.

[Comparative Example 5]

A process was performed in the same manner as that of Example 3 except that microcellulose (cellulose microcrystal (CMC)) (average diameter of 20 $\mu$m) was added instead of nanocellulose (cellulose nanocrystal (CNC)).

100 g of a polybutylene succinate-carbonate crosslinked copolymer-microcellulose composite material having a weight average molecular weight of 138,400 g/mol was obtained.

The physical property evaluation results according to Examples 1 to 3 and Comparative Examples 1 to 5 are shown in [Table 1].

[Table 1]

|  | Tensile strength (MPa) | Tensile toughness (MJ/m$^3$) | Tear toughness (J/cm) |
|---|---|---|---|
| Example 1 | 54 | 203.2 | 26.68 |
| Example 2 | 53 | 201.8 | 25.95 |
| Example 3 | 64 | 254.6 | 31.99 |
| Comparative Example 1 | 41 | 70.6 | 8.85 |
| Comparative Example 2 | 37 | 130.6 | 37.96 |
| Comparative Example 3 | 82 | 58.2 | 6.52 |
| Comparative Example 4 | 35 | 38.5 | 4.88 |
| Comparative Example 5 | 45 | 72.3 | 9.98 |

In the case of the material prepared by copolymerization of polybutylene succinate and the carbonate functional group of Comparative Example 2, when compared to Comparative Example 1, tear properties were significantly excellent, but tensile properties were relatively low.

On the other hand, in the case of the polybutylene succinate-carbonate crosslinked copolymer obtained by copolymerizing polybutylene succinate, a carbonate functional group, and a small amount of a crosslinkable multifunctional compound as in Example 1 or 2, it was confirmed that the tear properties and tensile properties were noticeably improved when compared to Comparative Example 1.

In addition, in the case of the composite material of a polybutylene succinate-carbonate crosslinked copolymer and nanocellulose in which a polybutylene succinate-carbonate crosslinked copolymer obtained by copolymerizing polybutylene succinate, a carbonate functional group, and a small amount of a crosslinkable multifunctional compound, and a small amount of nanocellulose were composited as in Example 3, it was confirmed that the tensile and tear properties were further significantly improved when compared to Comparative Examples 1 to 5 and Examples 1 and 2.

Hereinabove, although the present invention has been described by specific matters and limited embodiments, they have been provided only for assisting in the entire understanding of the present invention. Therefore, the present invention is not limited to the embodiments. Various modifications and changes may be made by those skilled in the art to which the present invention pertains from this description.

Therefore, the spirit of the present invention should not be limited to these embodiments, but the claims and all modifications equal or equivalent to the claims are intended to fall within the scope and spirit of the present invention.

**Claims**

1. A polybutylene succinate-carbonate crosslinked copolymer comprising a succinate-based monomer, a carbonate-based monomer, a crosslinkable multifunctional monomer, and 1,4-butanediol,
   wherein the crosslinkable multifunctional monomer is a monomer in which the number of functional groups is three or more, and the functional groups are any one or two or more selected from a hydroxy group, a carboxylic acid group, and a carboxylate group.

2. The polybutylene succinate-carbonate crosslinked copolymer of claim 1, wherein a molar ratio of the succinate-based monomer to the carbonate-based monomer in the polybutylene succinate-carbonate crosslinked copolymer is 0.1 to 90:10 to 99.9 mol%.

3. The polybutylene succinate-carbonate crosslinked copolymer of claim 1, wherein a molar ratio of the crosslinkable multifunctional monomer is 0.01 to 0.8 mol% with respect to the entirety of the succinate-based monomer and the carbonate-based monomer.

4. The polybutylene succinate-carbonate crosslinked copolymer of claim 1, wherein the crosslinkable multifunctional monomer is one or more selected from citric acid and tartaric acid.

5. The polybutylene succinate-carbonate crosslinked copolymer of claim 1, wherein the polybutylene succinate-carbonate crosslinked copolymer has tensile toughness satisfying the following Expression 1:

[Expression 1]

$$\frac{TT_1}{TT_0} \times 100 \geq 200(\%)$$

($TT_0$ is tensile toughness ($MJ/m^3$) of polybutylene succinate, and $TT_1$ is tensile toughness ($MJ/m^3$) of the polybutylene succinate-carbonate crosslinked copolymer).

6. The polybutylene succinate-carbonate crosslinked copolymer of claim 1, wherein the polybutylene succinate-carbonate crosslinked copolymer has tear toughness satisfying the following Expression 2:

[Expression 2]

$$\frac{tt_1}{tt_0} \times 100 \geq 200(\%)$$

($tt_0$ is tear toughness (J/cm) of polybutylene succinate, and $tt_1$ is tear toughness (J/cm) of the polybutylene succinate-carbonate crosslinked copolymer).

7. A disposable bag produced using the polybutylene succinate-carbonate crosslinked copolymer of any one of claims 1 to 6.

8. A composite material of a polybutylene succinate-carbonate crosslinked copolymer and nanocellulose, the composite material comprising a succinate-based monomer, a carbonate-based monomer, a crosslinkable multifunctional monomer, 1,4-butanediol, and nanocellulose,
   wherein the crosslinkable multifunctional monomer is a monomer in which the number of functional groups is three or more, and the functional groups are any one or two or more selected from a hydroxy group, a carboxylic acid group, and a carboxylate group.

9. The composite material of a polybutylene succinate-carbonate crosslinked copolymer and nanocellulose of claim 8, wherein the nanocellulose is contained in an amount of 0.01 to 0.8 parts by weight with respect to 100 parts by weight of the polybutylene succinate-carbonate crosslinked copolymer.

10. The composite material of a polybutylene succinate-carbonate crosslinked copolymer and nanocellulose of claim

11. The composite material of a polybutylene succinate-carbonate crosslinked copolymer and nanocellulose of claim 8, wherein the composite material of the polybutylene succinate-carbonate crosslinked copolymer and the nanocellulose has tensile toughness satisfying the following Expression 3:

[Expression 3]

$$\frac{TT_2}{TT_0} \times 100 \geq 300(\%)$$

($TT_0$ is tensile toughness (MJ/m$^3$) of polybutylene succinate, and $TT_2$ is tensile toughness (MJ/m$^3$) of the composite material of the polybutylene succinate-carbonate crosslinked copolymer and the nanocellulose).

12. The composite material of a polybutylene succinate-carbonate crosslinked copolymer and nanocellulose of claim 8, wherein the composite material of the polybutylene succinate-carbonate crosslinked copolymer and the nanocellulose has tear toughness satisfying the following Expression 4:

[Expression 4]

$$\frac{tt_2}{tt_0} \times 100 \geq 300(\%)$$

($tt_0$ is tear toughness (J/cm) of polybutylene succinate, and $tt_2$ is tear toughness (J/cm) of the composite material of the polybutylene succinate-carbonate crosslinked copolymer and the nanocellulose).

13. The composite material of a polybutylene succinate-carbonate crosslinked copolymer and nanocellulose of claim 8, wherein the composite material of the polybutylene succinate-carbonate crosslinked copolymer and the nanocellulose is prepared by an in-situ polymerization process.

14. A disposable bag produced using the composite material of the polybutylene succinate-carbonate crosslinked copolymer and the nanocellulose of any one of claims 8 to 13.

15. A method for preparing a composite material of a polybutylene succinate-carbonate crosslinked copolymer and nanocellulose, the method comprising:

dispersing nanocellulose in 1,4-butanediol to prepare a dispersion; and
mixing a succinate-based monomer, a carbonate-based monomer, a crosslinkable multifunctional monomer, and the 1,4-butanediol dispersion to prepare a composite material of a polybutylene succinate-carbonate crosslinked copolymer and nanocellulose in an in-situ manner,
wherein the crosslinkable multifunctional monomer is a monomer in which the number of functional groups is three or more, and the functional groups are any one or two or more selected from a hydroxy group, a carboxylic acid group, and a carboxylate group.

16. The method for preparing a composite material of a polybutylene succinate-carbonate crosslinked copolymer and nanocellulose of claim 15, wherein a molar ratio of the succinate-based monomer to the carbonate-based monomer in the polybutylene succinate-carbonate crosslinked copolymer is 0.1 to 90:10 to 99.9 mol%.

17. The method for preparing a composite material of a polybutylene succinate-carbonate crosslinked copolymer and nanocellulose of claim 15, wherein a molar ratio of the crosslinkable multifunctional monomer is 0.01 to 0.8 mol% with respect to the entirety of the succinate-based monomer and the carbonate-based monomer.

18. The method for preparing a composite material of a polybutylene succinate-carbonate crosslinked copolymer and nanocellulose of claim 15, wherein the crosslinkable multifunctional monomer is one or more selected from citric acid and tartaric acid.

19. The method for preparing a composite material of a polybutylene succinate-carbonate crosslinked copolymer and nanocellulose of claim 15, wherein the nanocellulose is contained in an amount of 0.01 to 0.8 parts by weight with respect to 100 parts by weight of the polybutylene succinate-carbonate crosslinked copolymer.

20. The method for preparing a composite material of a polybutylene succinate-carbonate crosslinked copolymer and nanocellulose of claim 15, wherein the nanocellulose has an average diameter of 2 nm to 200 nm and an average length of 100 nm to 10 $\mu$m.

## INTERNATIONAL SEARCH REPORT

| International application No. |
|---|
| **PCT/KR2022/001038** |

**A. CLASSIFICATION OF SUBJECT MATTER**

**C08G 64/30**(2006.01)i; **C08G 63/64**(2006.01)i; **C08L 69/00**(2006.01)i; **C08L 1/02**(2006.01)i; **C08K 7/02**(2006.01)i

According to International Patent Classification (IPC) or to both national classification and IPC

**B. FIELDS SEARCHED**

Minimum documentation searched (classification system followed by classification symbols)

C08G 64/30(2006.01); C08G 63/16(2006.01); C08G 64/02(2006.01); C08G 64/38(2006.01); C08K 5/00(2006.01); C08L 67/02(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리부틸렌숙시네이트-카보네이트 가교공중합체(polybutylene succinate-carbonate crosslinked copolymer), 나노셀룰로오스(nanocellulose), 복합소재(composite material), 숙시네이트계 단량체(succinate-based monomer), 카보네이트계 단량체(carbonate-based monomer), 가교성 다관능성 단량체(crosslinkable multifunctional monomer)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | KR 10-2001-0032889 A (BAYER AKTIENGESELLSCHAFT) 25 April 2001 (2001-04-25)<br>See paragraphs [0001], [0016]-[0024], [0042] and [0062]. | 1-7<br><br>8-20 |
| Y | KR 10-2116440 B1 (KOREA RESEARCH INSTITUTE OF CHEMICAL TECHNOLOGY) 28 May 2020 (2020-05-28)<br>See paragraphs [0009], [0082] and [0092]-[0102]; and claims 1 and 2. | 8-20 |
| A | KR 10-1897180 B1 (KOREA RESEARCH INSTITUTE OF CHEMICAL TECHNOLOGY) 10 September 2018 (2018-09-10)<br>See entire document. | 1-20 |
| A | JP 2006-036954 A (TEIJIN LTD.) 09 February 2006 (2006-02-09)<br>See entire document. | 1-20 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 April 2022** | **29 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/001038**

**C. DOCUMENTS CONSIDERED TO BE RELEVANT**

| Category* | Citation of document, with indication, where appropriate, of the relevant passages | Relevant to claim No. |
|---|---|---|
| A | JP 2009-041036 A (MITSUBISHI CHEMICALS CORP.) 26 February 2009 (2009-02-26)<br>See entire document. | 1-20 |

Form PCT/ISA/210 (second sheet) (July 2019)

INTERNATIONAL SEARCH REPORT
Information on patent family members

International application No.

**PCT/KR2022/001038**

| Patent document cited in search report | | | Publication date (day/month/year) | Patent family member(s) | | | Publication date (day/month/year) |
|---|---|---|---|---|---|---|---|
| KR | 10-2001-0032889 | A | 25 April 2001 | AU | 1876399 | A | 28 June 1999 |
| | | | | AU | 1999-18763 | A1 | 28 June 1999 |
| | | | | CA | 2313192 | A1 | 17 June 1999 |
| | | | | CN | 1281482 | A | 24 January 2001 |
| | | | | DE | 19754418 | A1 | 10 June 1999 |
| | | | | EP | 1037943 | A1 | 27 September 2000 |
| | | | | JP | 2001-525473 | A | 11 December 2001 |
| | | | | NO | 20002947 | A | 03 July 2000 |
| | | | | NO | 20002947 | D0 | 08 June 2000 |
| | | | | NO | 20002947 | L | 03 July 2000 |
| | | | | WO | 99-29768 | A1 | 17 June 1999 |
| | | | | ZA | 9811205 | A | 09 June 1999 |
| | | | | ZA | 9811205 | B | 09 June 1999 |
| KR | 10-2116440 | B1 | 28 May 2020 | JP | 2020-125473 | A | 20 August 2020 |
| | | | | JP | 6858284 | B2 | 14 April 2021 |
| | | | | WO | 2020-159282 | A1 | 06 August 2020 |
| KR | 10-1897180 | B1 | 10 September 2018 | CN | 110997806 | A | 10 April 2020 |
| | | | | EP | 3643750 | A1 | 29 April 2020 |
| | | | | US | 2020-0216660 | A1 | 09 July 2020 |
| | | | | WO | 2018-236151 | A1 | 27 December 2018 |
| JP | 2006-036954 | A | 09 February 2006 | JP | 4310248 | B2 | 05 August 2009 |
| JP | 2009-041036 | A | 26 February 2009 | AT | 465199 | T | 15 May 2010 |
| | | | | CN | 101163729 | A | 16 April 2008 |
| | | | | CN | 101163729 | B | 10 April 2013 |
| | | | | CN | 103172840 | A | 26 June 2013 |
| | | | | CN | 103172840 | B | 02 March 2016 |
| | | | | CN | 103183812 | A | 03 July 2013 |
| | | | | CN | 103183812 | B | 02 March 2016 |
| | | | | CN | 103183813 | A | 03 July 2013 |
| | | | | CN | 103183814 | A | 03 July 2013 |
| | | | | CN | 103183814 | B | 02 March 2016 |
| | | | | EP | 1882712 | A1 | 30 January 2008 |
| | | | | EP | 1882712 | B1 | 21 April 2010 |
| | | | | EP | 2204396 | A1 | 07 July 2010 |
| | | | | EP | 2204396 | B1 | 25 August 2021 |
| | | | | EP | 2365017 | A2 | 14 September 2011 |
| | | | | EP | 2365017 | A3 | 29 April 2015 |
| | | | | EP | 2365017 | B1 | 03 July 2019 |
| | | | | EP | 2366726 | A2 | 21 September 2011 |
| | | | | EP | 2366726 | A3 | 06 May 2015 |
| | | | | EP | 2366727 | A2 | 21 September 2011 |
| | | | | EP | 2366727 | A3 | 06 May 2015 |
| | | | | EP | 2402383 | A2 | 04 January 2012 |
| | | | | EP | 2402383 | A3 | 13 May 2015 |
| | | | | EP | 3909998 | A2 | 17 November 2021 |
| | | | | EP | 3919543 | A2 | 08 December 2021 |
| | | | | EP | 3925996 | A2 | 22 December 2021 |
| | | | | EP | 3925997 | A2 | 22 December 2021 |
| | | | | EP | 3925998 | A2 | 22 December 2021 |
| | | | | EP | 3925998 | A3 | 30 March 2022 |

Form PCT/ISA/210 (patent family annex) (July 2019)

**INTERNATIONAL SEARCH REPORT**
Information on patent family members

International application No.

**PCT/KR2022/001038**

| Patent document cited in search report | Publication date (day/month/year) | Patent family member(s) | | | Publication date (day/month/year) |
|---|---|---|---|---|---|
| | | JP | 2006-321994 | A | 30 November 2006 |
| | | JP | 2006-321995 | A | 30 November 2006 |
| | | JP | 2006-321996 | A | 30 November 2006 |
| | | JP | 2006-321997 | A | 30 November 2006 |
| | | JP | 2006-328379 | A | 07 December 2006 |
| | | JP | 2007-197652 | A | 09 August 2007 |
| | | JP | 2007-197653 | A | 09 August 2007 |
| | | JP | 2007-197654 | A | 09 August 2007 |
| | | JP | 2009-077719 | A | 16 April 2009 |
| | | JP | 2009-079057 | A | 16 April 2009 |
| | | JP | 2009-215564 | A | 24 September 2009 |
| | | JP | 2009-215565 | A | 24 September 2009 |
| | | JP | 2009-221482 | A | 01 October 2009 |
| | | JP | 2013-079395 | A | 02 May 2013 |
| | | JP | 4380653 | B2 | 09 December 2009 |
| | | JP | 4380654 | B2 | 09 December 2009 |
| | | JP | 4380704 | B2 | 09 December 2009 |
| | | JP | 5120729 | B2 | 16 January 2013 |
| | | JP | 5303237 | B2 | 02 October 2013 |
| | | JP | 5378063 | B2 | 25 December 2013 |
| | | JP | 5390255 | B2 | 15 January 2014 |
| | | JP | 5652986 | B2 | 14 January 2015 |
| | | US | 10287393 | B2 | 14 May 2019 |
| | | US | 10870727 | B2 | 22 December 2020 |
| | | US | 2009-0171037 | A1 | 02 July 2009 |
| | | US | 2011-0009531 | A1 | 13 January 2011 |
| | | US | 2011-0288207 | A1 | 24 November 2011 |
| | | US | 2013-0030145 | A1 | 31 January 2013 |
| | | US | 2018-0171071 | A1 | 21 June 2018 |
| | | US | 2019-0185615 | A1 | 20 June 2019 |
| | | US | 2021-0095071 | A1 | 01 April 2021 |
| | | US | 7888084 | B2 | 15 February 2011 |
| | | US | 7985566 | B2 | 26 July 2011 |
| | | US | 8021864 | B2 | 20 September 2011 |
| | | US | 9080009 | B2 | 14 July 2015 |
| | | WO | 2006-115226 | A1 | 18 December 2008 |
| | | WO | 2006-115226 | A1 | 02 November 2006 |

Form PCT/ISA/210 (patent family annex) (July 2019)